# EUROPEAN PATENT APPLICATION

(11) **EP 3 945 478 A1**
(43) Date of publication of application: **02.02.2022**
(21) Application number: 20188148.9
(22) Date of filing: 28.07.2020
(51) Int. Cl.: G06Q 10/06, G07C 5/08

(54) **METHOD AND SYSTEM FOR MANAGING A PLURALITY OF NETWORKS OF VEHICLES**

(71) Applicant: Siemens Aktiengesellschaft, 80333 München (DE)
(72) Inventor: KASIBOTLA, Phanindra, 560100 Bangalore, Karnataka (IN); KUNDU, Ricktam, 110045 New Delhi, Delhi (IN); MANGAL, Manjush, 560100 Bangalore, Karnataka (IN); RAJ, Arun, 635110 Hosur, Tamil Nadu (IN); SHARMA, Deven, 560100 Bangalore, Karnataka (IN); SINGH, Himanshu Kumar, 560100 Bangalore, Karnataka (IN); SINGH, Prashant Kumar, 560100 Bangalore, Karnataka (IN); THIYAGARAJAN, Rajaram, 560102 Bangalore, Karnataka (IN)
(74) Representative: Patentanwaltskanzlei WILHELM & BECK

(57) **Abstract**

The present invention provides a method and system of managing a plurality of networks of vehicles. The method comprises receiving a request to assign one or more vehicles (114A-N) to perform a specific task. The request comprises a set of information pertaining to execution of the specific task. The method comprises determining a network of vehicles from the plurality of networks of vehicles based on the specific task, and assigning the one or more vehicles (114A-N) to perform the specific task based on policies associated with respective one or more vehicles 114A-N. The policies are defined by the one or more vehicles 114A-N.

## Description

The present invention generally relates to the field of vehicle management systems, and more specifically to a method and system for managing a plurality of networks of vehicles.

In the field of transportation and automobile industry, the aspects of mobility and automation are driven by controlled vehicles, whether in a controlled environment like factory floor or in an open environment like road, water or air. The vehicles in a particular environment are needed to be efficiently managed to obtain maximum throughput of vehicles available in an environment. However, presently available methods to manage the vehicles are controlled by a centralized network that dictates an operation of the vehicles. Conventionally, any centralized network has the policies made and enforced by the centralized controller. The controller's business interests are prioritized over the welfare of the network members and it cannot be guaranteed to function fairly without bias. This reduces the fairness in the network and discourages participants to join the network.

Furthermore, the conventional centralized methods have several drawbacks associated therewith. One of the limitations in centrally controlled vehicles is that the aggregator decides the terms on which a vehicle joins the network. For example, a vehicle owner might not be willing to travel to distant locations from its base location, or might not be willing to accept longer duration trips, but the aggregator does not consider this and penalizes the vehicle owner for declining the request. If the vehicle is autonomous and wishes to join the network only temporarily, such as only for a short duration of the day, it might not be possible. Furthermore, another drawback associated with centrally controlled methods is that the aggregator takes the decisions regarding the matching of user requests and vehicles and the pricing details, thereby making the system unfair and unreliable. Furthermore, the fees enforced by the aggregator are high and this is not transparent to the service providers and consumers. This may result in exorbitant fees during peak hours, unexpected cancellation of services and so forth.

In light of the above, there exists a need for a system that manages plurality of networks of vehicles in a decentralized, fair and transparent manner

Therefore, the object of the invention is to provide a system and method for managing plurality of networks of vehicles.

The object of the present invention is achieved by a method of managing plurality of networks of vehicles.

The method comprises a step of receiving a request to assign one or more vehicles to perform a specific task. The request comprises a set of information pertaining to execution of the specific task. The method comprises determining a network of vehicles from the plurality of networks of vehicles based on the specific task. The method comprises assigning the one or more vehicles to perform the specific task based on polices associated with respective one or more vehicles. The policies are defined by the one or more vehicles.

The method of assigning the one or more vehicles to perform the specific task based on policies defined by one or more vehicles comprises identifying vehicles from the network of vehicles based on a policy associated with each of the vehicles and the set of information of the specific task. The method comprises sending a request for performing the specific task to the identified vehicles based on a unique identifier associated with each of the vehicles and a unique identifier associated with the network of vehicles. The method comprises receiving a response to the request for performing the specific task from each of the identified vehicles. The method comprises validating the response from each of the identified number of vehicles using an information associated with the vehicles stored on a distributed ledger. The method comprises assigning the one or more vehicles from the identified vehicles to perform the specific task based on the validated response.

The method comprises defining one or more policies for each of the vehicles in the network of vehicles. The method comprises dynamically assigning priority to each of the policies defined for each of the vehicles in the network of vehicles based on one or more factors.

The method comprises storing the policies associated with each of the vehicles in the network of vehicles in the distributed ledger.

The method of identifying the one or more vehicles from the network of vehicles based on the policies associated with each of the one or more of vehicles and the set of information of the specific task comprises comparing the set of information of the specific task with the one or more policies associated with each of the vehicles in the network of vehicles. The method comprises identifying the one or more vehicles from the network of vehicles based on an outcome of the comparison.

The method of receiving the response to the request for performing the specific task from each of the identified vehicles comprises receiving the response to the request from at least one vehicle based on the priority assigned to the policies.

The method of receiving the response to the request for performing the specific task from each of the identified vehicles comprises receiving the response to the request from at least one vehicle based on the match between the request and one of policies.

The method comprises receiving a request to register a vehicle in any of the plurality of networks of vehicles in a distributed ledger. The method comprises validating the unique identifier associated with the vehicle. The method comprises registering the vehicle in the network of vehicles if the unique identifier associated with the vehicle is successfully validated.

The method comprises receiving a request to approve one or more policies from a vehicle in the network of vehicles. The method comprises validating the policy associated with the vehicle based on predefined criteria. Furthermore, the method comprises sending a response to the request to approve the policy to the vehicle based on the outcome of validation.

The method comprises detecting violation of one of the policies by the vehicle in the network of vehicles. The method comprises barring the vehicle from participating in performing the specific task based on the detected violation.

The method of assigning the one or more vehicles to perform the specific task comprises selecting the one or more vehicles from the network of vehicles to perform the specific task. Furthermore, the method comprises dividing the specific task into a number of sub-tasks to be performed by each of the one or more vehicles. The method comprises organizing the selected one or more vehicles to perform the specific task.

The object of the present invention is also achieved by a cloud computing system comprising a communication interface communicatively coupled to each of vehicles in a plurality of networks. The cloud computing system comprises one or more processing units communicatively coupled to the communication interface, and a memory unit communicatively coupled to the one or more processing units. The memory unit comprises a set of machine-readable instructions executable by the one or more processing units, wherein the set of machine readable instructions cause the processing unit to perform the aforementioned method steps.

In an embodiment, the cloud computing system a distributed ledger having a plurality of nodes implemented using the one or more processing units and the memory unit.

The object of the invention is also achieved by a computer program product comprising machine readable instructions, that when executed by one or more processing units, cause the one or more processing units to perform the aforementioned method steps.

This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: is a block diagram of a cloud computing system for managing vehicles in a plurality of networks, according to an embodiment of the present invention;
- FIG 2: is a block diagram of an exemplary distributed ledger implemented using the cloud computing system for managing a plurality of networks of vehicles, according to another embodiment of the present invention;
- FIG 3: is block diagram of an exemplary entity node in the distributed ledger of FIG 2 comprising one or more elements, according to an embodiment of the present invention;
- FIG 4: is a block diagram of a computing device associated with the nodes in the distributed ledger of FIG 2, according to an embodiment of the present invention;
- FIG 5: illustrates a process flowchart depicting a method of a plurality of networks of vehicles, according to an embodiment of the present invention;
- FIG 6: illustrates a process flowchart depicting a method of assigning the one or more vehicles to perform the specific task based on the set of policies defined by one or more vehicles, according to an embodiment of the present invention;
- FIG 7: illustrates a process flowchart depicting a method of assigning the one or more vehicles to perform the specific task, according to an embodiment of the present invention;
- FIG 8: illustrates a process flowchart depicting a method for registering a vehicle in a distributed ledger, according to an embodiment of the present invention; and
- FIG 9: illustrates a process flowchart depicting a method for approving a policy from a vehicle in the network of vehicles, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

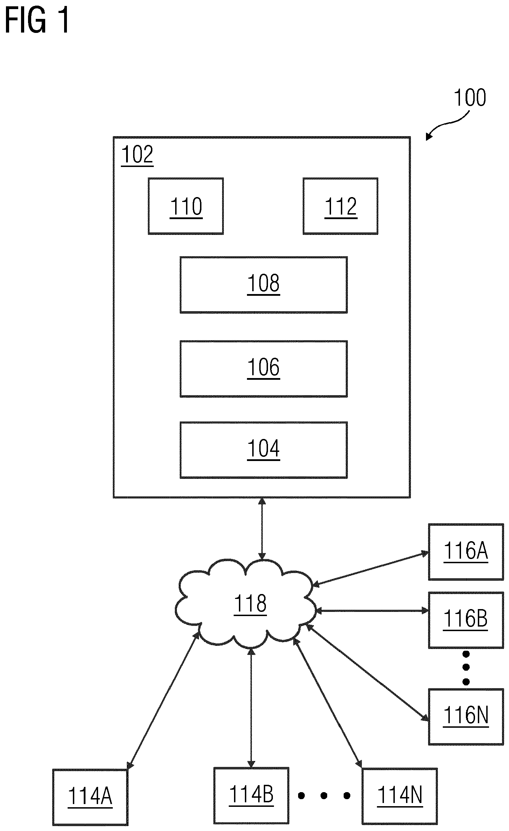

FIG 1 is a block diagram of a cloud computing system 100 for managing a plurality of networks of vehicles, according to an embodiment of the present invention. Particularly, the system 100 comprises a cloud computing device 102 configured for providing cloud services for managing vehicles in a plurality of network of vehicles. The cloud computing device 102 comprises a cloud communication interface 104, a cloud computing hardware and OS 106, a cloud computing platform 108, a vehicle assignment module 110, and a vehicle information database 112. The cloud communication interface 104 enables communication between the cloud computing platform 108, and one or more entities such as vehicles 114A-N and user devices 116A-N over a network 118.

The cloud computing hardware and OS 106 may include one or more servers on which an operating system (OS) is installed and includes one or more processing units, one or more storage devices for storing data, and other peripherals required for providing cloud computing functionality. The cloud computing platform 108 is a platform which implements functionalities such as data storage, data analysis, data visualization, data communication on the cloud hardware and OS 106 via APIs and algorithms; and delivers the aforementioned cloud services using cloud-based applications. The cloud computing platform 108 employs the vehicle assignment module 110 for managing vehicles in a network of vehicles in a decentralized manner. The cloud computing platform 108 also includes the vehicle information database 112 for storing information pertaining to vehicles as obtained from regulatory bodies, government, and so on.

In accordance with the foregoing embodiments, the cloud computing device 102 may enable users to send a request comprising a set of information pertaining to a specific task, and receive a list of available vehicles 114A-N capable of performing the specific task based on policies defined for the vehicles. In particular, the vehicle assignment module 110 is configured to receive a request to assign one or more vehicles 114A-N to perform a specific task. The request comprises a set of information pertaining to execution of the specific task. Further, the vehicle assignment module 110 is configured to determine a network of vehicles from the plurality of networks of vehicles based on the specific task, and assign the one or more vehicles to perform the specific task based on policies associated with respective one or more vehicles, wherein the policies are defined by the one or more vehicles.

In one embodiment, the vehicles 114A-N may be autonomous vehicles (AVs). Autonomous vehicles are vehicles capable of sensing their environment and navigating without human input. Autonomous vehicles can include terrain-based vehicles (e.g., cars), watercraft, hovercraft, drones, and aircraft. Autonomous vehicles may detect surroundings using a variety of techniques such as radar, lidar, Global positioning systems (GPS), odometry, and computer vision. Land-based autonomous vehicle guidance systems interpret sensory information to identify appropriate navigation paths, obstacles, and relevant signage. Land-based autonomous vehicles have control systems that can analyze sensory data to distinguish between different cars on the road and guide themselves to desired destinations. Beneficially, autonomous vehicles (e.g., autonomous cars) may lead to fewer traffic accidents, increased roadway capacity, reduced traffic congestion, and enhanced mobility for people. Autonomous cars may also relieve travelers from driving and navigation chores, freeing commuting hours with more time for leisure or work. It will be appreciated that the present invention should not be construed limiting to only autonomous vehicles. The embodiments as disclosed in the appended claims can be applied to non-autonomous systems and semi-autonomous systems without any limitation.

The one or more vehicles 114A-N and the user devices 116A-N may have an operating system and at least one software program for performing desired operations in the system 100. Also, the one or more vehicles 114A-N and user devices 116A-N may run software applications for collecting and pre-processing data such as the requests received from users, requests for registering a vehicle, requests for validating a policy and the like , and further transmitting the pre-processed data to the cloud computing device 102.

The user devices 116A-N may include graphical user interfaces capable of inputting and sending a request comprising set of instructions pertaining to execution of the specific task and receiving one or more identified vehicles for optimal selection of the available vehicles 114A-N capable of performing the specific task. Each of the user devices 116A-N may be provided with a communication interface for interfacing with the cloud computing system 102. Users of the user devices 116A-N and the vehicles 114A-N can access the cloud computing system 102 via respective graphical user interfaces.

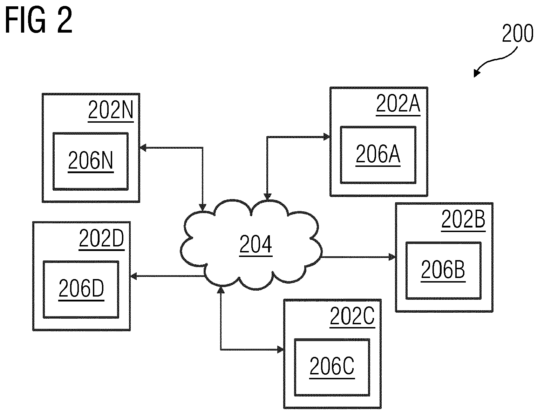

In an exemplary embodiment, the cloud computing system 100 is implemented as a distributed ledger, wherein distributed ledger has nodes. Each node may belong to an owner of vehicle and each of the nodes use the cloud computing hardware and OS 106 to perform one or more actions in the distributed ledger. Each of the nodes comprise a computing device having a vehicle assignment and a database. One such exemplary embodiment is explained in further detail in conjunction with FIG 2 to FIG 4.

FIG 2 is a block diagram of an exemplary distributed ledger 200 implemented using the cloud computing system for managing a plurality of networks of vehicles, according to another embodiment of the present invention. In particular, the one or more distributed ledgers 200 (e.g., blockchain network) may be provided across one or more entities over a network 204. Exemplary entities 202A-N may include vehicles 114A-N, parties to a transaction, individual computing devices, shared computing resources, smart devices (e.g., smartwatches, tablets, smartphones), and so on. The entities 202A-N may store the distributed ledgers on computing systems which may be utilized in maintaining and/or updating the distributed ledgers. Each entity 202A-N may be configured for storing a version of the distributed ledger or a portion thereof.

In some examples, the distributed ledger is a blockchain based ledger wherein events and transactions are verified by the network participants in a decentralized manner and recorded on all participant nodes. Every node is identified by its address which is in turn derived from its public-private key pair. All data is recorded on the blockchain and accessible to all participants. This information is immutable and hence provides accountability and audit trails. Blockchain network (achieved via distributed consensus mechanisms) ensures that no single entity can control the network and as long as majority of the participants are honest, the network will function in a fair and unbiased manner. Blockchain also supports smart contracts which allows the business logic to be encoded in the form of a deterministic computer program. It allows individual vehicles joining the network to define their terms and conditions using smart contracts This program is executed in an isolated secure environment on all nodes and verified in a distributed manner.

In some embodiments, the entities 202A-N include at least a set of computing devices 206AN. For example, a ledger may be stored on a large number of publicly available devices, each acting as a "node" for storing a copy of the ledger (e.g., being collaboratively maintained by anonymous peers on a network). In some embodiments, the ledger is only stored and maintained on a set of trusted "nodes", such as the computing systems of authorized users. In some embodiments, a combination and/or a "mix" of both trusted nodes and public nodes may be utilized, with the same and/or different rules being applied to activities performed at each (e.g., a different validation process may be used for untrusted nodes, or simply untrusted nodes may be unable to perform certain activities). In some embodiments, there may be different levels of nodes with differing characteristics and applied business logic.

The ledgers, ledger entries, and/or information stored on the ledger entries may be used for vehicle information record. Vehicle information record may include information regarding vehicle identification number, vehicle location, vehicle status (such as waiting to join, available, assigned, on a trip and the like) transactions involving vehicles 114A-N, automated "smart contracts", documents relating to vehicles 114A-N, and so on. Smart contracts are computer instructions or code intended to facilitate, verify, or enforce the negotiation or performance of a contract. Further, the ledger and ledger entries may utilize encryption technology to facilitate and/or validate digital signatures, for example, facilitating multi-signature documentation, ensuring the authenticity and integrity of vehicle record information, and so on.

Each of the one or more entities 202A-N may have, at various times, versions of the ledger, and the ledger may be maintained through the propagation of entries and/or updates that may be copied across ledgers. Ledger entries may contain elements of information (e.g., transaction records, document content, contract clauses, versioning information). There may be various rules and/or logic involved in activities relating to the ledger entries (e.g., creating, updating, validating), for example, a supermajority or a unanimous consent between entities may be enforced as a condition to an activity relating to an entry. In some embodiments, distributed ledgers are utilized and the ledger entries are adapted to have various linkages to one another such that the integrity of the ledger entries can be reinforced and/or validated.

The ledger may be maintained through, for example, a "distributed network system", the distributed network system providing decentralized control and storage of the ledger at the one or more entities (which may be considered "nodes" of the system). The number of "nodes" may be fixed or vary with time, and increasing or decreasing the number of "nodes" may impact the performance and/or security of the system. The ledger copies stored and maintained at each "node" provide cross-validation with one another in the event of conflicts between ledgers, and various cryptographic and/or hashing algorithms may be utilized during the generation, updating, linking, and so on, of ledger entries such that ledger entries have increased resiliency to unauthorized tampering or modification.

For example, a distributed ledger may be distributed across entities 202A-N and used to track information relating to various vehicle assets, obligations, contracts, documents, etc. The distributed ledger may have entries linked to one another using cryptographic vehicle information, and entries in the blockchain may be ordered, time stamped, and/or associated with metadata such that the blockchain is designed for protection against "double" transfers and unauthorized modification of ledger entries, such as violation of policies.

In some embodiments, each block includes respective unique identifiers associated with one or more vehicles 114A-N along with corresponding vehicle and transaction data. The block also includes a timestamp indicating when the block was created. If there is more than one block in the blockchain, each block beyond a first block further includes a hash of a previous block in the blockchain. The term "unique identifier" as used herein refers to a value or code that uniquely identifies a vehicle.

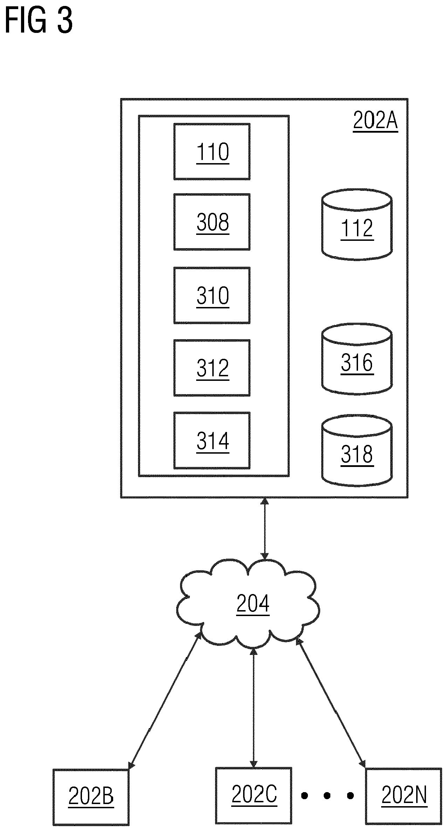

FIG 3 is a block diagram of an exemplary entity node 202A in the distributed ledger of FIG 2, according to an embodiment of the present invention. As shown, the entity node 202A is in communication with other entities 202B-N via the network 204. The entity node 202A manages networks of vehicles and vehicles 114A-N in the network of vehicles using blocks organized in blockchains and indexed by unique identifiers. Any vehicle owner may be able to register their vehicle on the distributed ledger as an authorized entity.

The entity node 202A may involve one or more units being provided through various computing embodiments, such as using a combination of hardware, software, and/or embedded firmware. For example, the system and its units may be implemented using servers, processors, computer-readable memory, and storage devices, etc. In some embodiments, the system may be provided by distributed resources (e.g., through a "cloud computing" implementation). The entity node 202A comprises the vehicle assignment module 110 for managing a plurality of networks of vehicles. Further, the entity node 202A may be comprises of one or more units, including a data extraction unit 308, a data security unit 310, a block tracking unit 312, a blockchain interface unit 314, a blockchain database 316, and the vehicle database 112 and a storage 318.

The data extraction unit 308 may be configured for extracting various elements of information from various user interface units, and other information sources, such as vehicle database 112, smart contracts, transaction records, documents, financial statements, etc. These information sources may provide information in the form of electronic documentation, etc. In some embodiments, the data extraction unit 308 is configured to anonymize and/or redact information, and/or extract a subset of information relevant to a particular purpose. This information may be stored at the storage 318

The data security unit 310 may be configured for encrypting and/or otherwise transforming information provided by the data extraction unit 308, for example, applying various encryption algorithms and/or techniques (e.g., public key/private key encryption) to extracted elements of information. In some embodiments, the data security unit 210 may be configured to generate information which may be utilized in the formation and/or generation of one or more blocks for insertion and/or addition into the blockchain. Furthermore, the data security unit 310 may be configured to provide secure exchange of information between vehicles and users.

The block tracking unit 312 may be configured for maintaining relationships and/or associations identifying how blocks may be related to one another, and/or the identity of various blocks (e.g., identifying what information is associated with each block). The block tracking unit 312 may be configured for identifying a set of blocks using the unique identifier to generate records for monitoring the blocks.

The blockchain interface unit 314 may be configured for maintaining and updating one or more blockchains. The blockchain interface unit 314 may be configured, for example, to apply, execute, update, etc., various rules and/or logic associated with the blockchain. For example, rules may be associated with consensus requirements, smart contracts and permission attributes for updating blocks, adding blocks, validating new blocks, rejecting new blocks, etc. The rules may be stored in the blockchain database 316.

The blockchain database 316 may be configured to store information associated with the blockchain, such as the blockchain ledger, blockchain entries, information stored on various blocks, linkages between blocks, and rules associated with the blockchain, etc. The storage 318 and/or blockchain database 316 may be provided using various types of storage technologies, such as solid state drives, hard disk drives, flash memory, and may be stored in various formats, such as relational databases, non-relational databases, flat files, spreadsheets, and extended markup files, etc.

The entity node 202A connects to other nodes in various ways including directly coupled and indirectly coupled via the network 204. The network 204 is capable of carrying data. The network 204 can involve wired connections, wireless connections, or a combination thereof. The network 204 may involve different network communication technologies, standards and protocols, such as for example Global System for Mobile Communications (GSM), Code division multiple access (CDMA), wireless local loop, WMAX, Bluetooth, Long Term Evolution (LTE) and so on. The network 204 may involve different physical media such as a coaxial cable, fiber optics, transceiver stations and so on. Example network types include the Internet, Ethernet, plain old telephone service (POTS) line, public switched telephone network (PSTN), integrated services digital network (ISDN), digital subscriber line (DSL), and others, including any combination of these. The network 204 can be a local area network or wide area network.

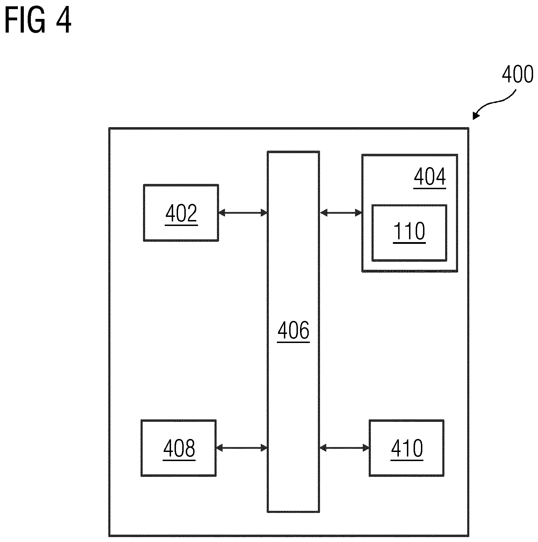

FIG 4 is block diagram of a computing device 400 (such as the computing devices 206A-N of FIG 2) associated with the nodes 202A-N in the distributed ledger, according to an embodiment. The computing device 400 may be a personal computer, a laptop computer, a tablet, a server, a virtual machine and the like. The computing device 400 includes a processing unit 402, a memory 404, a bus 406, an input unit 408, and a display unit 410. The computing device 402 may be a specific purpose computer configured to participate in assignment of vehicles 114A-N to received requests based on one or more policies defined for the vehicles 114A-N.

The processing unit 402 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 402 may also include embedded controllers, such as generic or programmable logic devices or arrays, application specific integrated circuits, single-chip computers, and the like.

The memory 404 may be non-transitory volatile memory and/or non-volatile memory. The memory 404 may be coupled for communication with the processing unit 402, such as being a computer-readable storage medium. The processing unit 402 may execute instructions and/or code stored in the memory 404. A variety of computer-readable instructions may be stored in and accessed from the memory 404. The memory 404 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 404 includes a vehicle assignment module 110 stored in the form of machine-readable instructions on any of the above-mentioned storage media and may be in communication to and executed by the processing unit 402. When the machine-readable instructions are executed by the processing unit 402, the vehicle assignment module 110 causes the processing unit 402 to receive a request for performing the specific task from the associated network of vehicles having a unique identifier, send a response to the request for performing the specific task based on the one or more policies of the vehicles 114A-N, and initiate an execution of the specific task

The input unit 408 may provide ports to receive input from input devices such as keypad, touch-sensitive display, camera (such as a camera receiving gesture-based inputs), etc. capable of receiving input signals such as set of policies as entered by an owner of the vehicle 114A-N. The display unit 410 may provide ports to output data via output device with a graphical user interface for displaying received requests, route maps and so forth.

The bus 406 acts as interconnect between the processing unit 402, the memory 404, the input unit 408, and the display unit 410.

Those of ordinary skilled in the art will appreciate that the hardware depicted in FIG 4 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

The computing device 400 in accordance with an embodiment of the present disclosure includes an operating system employing a graphical user interface. The operating system permits multiple display windows to be presented in the graphical user interface simultaneously with each display window providing an interface to a different application or to a different instance of the same application. A cursor in the graphical user interface may be manipulated by a user through the pointing device. The position of the cursor may be changed and/or an event such as clicking a mouse button, generated to actuate a desired response.

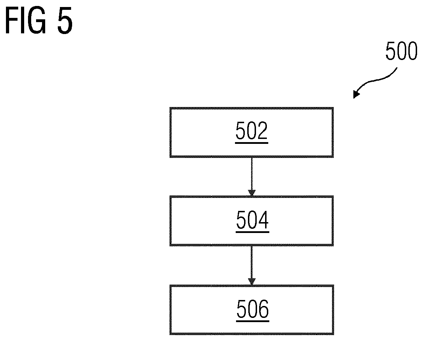

FIG 5 is a process flowchart 500 depicting a method of managing a plurality of networks of vehicles, according to an embodiment of the present invention. The plurality of networks of vehicles may comprise at least one vehicle in each of the networks of vehicles. Each of the networks of vehicles may comprise a number of vehicles communicatively coupled to each other over a network and having a common objective, such as to provide particular type of services, or capability to perform a particular type of task. In an example, a network of vehicles may comprise vehicles such as loader trucks capable of transporting goods from one location to another. In another example, a network of vehicles may comprise vehicles such as buses capable of transporting people from one location to another. In yet another example, a network of vehicles may comprise vehicles such as unmanned aerial vehicles (UAVs) capable of shipping and dropping parcels at particular locations. Each of the plurality of networks may be capable of performing a specific type of task such as relocating people, relocating goods, surveillance of an area, mechanical operations such as drilling, mixing and other construction operations, and so forth.

At step 502, a request to assign one or more vehicles 114A-N to perform a specific task is received. The request comprises a set of information pertaining to execution of the specific task. The set of information specifying details and requirements of the specific task may be received from a user via the graphical user interface. The set of information in the specific task may comprise one or more instructions and/or details regarding the specific task to be performed by the one or more vehicles 114A-N.

The set of information may include a geographical information of a location of the execution of the specific task, a type of task to be performed such as drop and pick of people and/or objects, a total distance to be covered by the vehicles 114A-N, monetary value offered in exchange for execution of the specific task and so forth. In an example, the specific task may be picking up a person from a first location and dropping the person to a second location. Herein, the set of information may be geographical position of location A and geographical position of location B, monetary value in exchange for execution of pickup and drop, and number of people to be relocated and the like. In another example, the specific task may be disinfecting a particular area. The set of information may include boundary conditions of a geographical location of a particular area to be disinfected, the type of disinfectant to be used, occurrence of disinfecting the area, monetary value offered in exchange for the execution of task, and the like. In another example, the specific task comprises mining a particular area for a period of time. Herein, the set of information may include boundary conditions of a geographical location of a particular area to be mined, specification of type of mining, monetary value offered in exchange for the execution of task, and the like.

At step 504, a network of vehicles is determined from the plurality of networks of vehicles based on the specific task. Notably, a particular network of vehicles comprising one or more vehicles 114A-N capable of performing a particular task is selected from the plurality of networks of vehicles based on the set of information pertaining to the specific task in the request. In an example, a type of specific task is determined from the set of information of the request. The type of specific task may be compared with one or more parameters of the vehicles 114A-N in each of the plurality of networks of vehicles. The one or more parameters may include specification such as model, build, technical capabilities of the vehicles 114AN and the like, a geographical location of operation of the vehicles, a duration of operation of vehicles 114A-N and so forth. Henceforth, one or more networks of vehicle comprising vehicles 114A-N capable of performing the specific task is selected from the plurality of networks.

At step 506, the one or more vehicles 114A-N are assigned to perform the specific task based on policies associated with respective one or more vehicles 114A-N. The policies are defined by the one or more vehicles 114A-N. In an embodiment, the assignment of the one or more vehicles 114A-N is initiated to perform the specific task by forwarding the received request to the network of vehicles. The request as received from the user is forwarded to determined one or more network of vehicles capable of performing the specific task. Herein, the network of vehicles is configured to assign the one or more vehicles 114A-N to perform the specific task. In particular, the network of vehicles that is capable of performing the specific task is configured to select one or more vehicles 114A-N that are best suited to perform the specific task based on one or more parameters, such as capability of the vehicle, availability of the vehicle, a current location of the vehicle and so forth. The network of vehicles is configured to select one or more vehicles 114A-N in the network of vehicles that have the potential capability of performing the specific task and is further configured to forward the request to one or more potential vehicles 114A-N that are capable of performing the specific task. In an example, the specific task is transporting goods from one location to another. The one or more networks of vehicles are selected based on parameters of the vehicles 114A-N in the networks of vehicles, and the request is forwarded to each of the selected one or more networks of vehicles. The selected one or more networks of vehicles comprise vehicles 114A-N capable of transporting goods such as loader trucks. Furthermore, each of the selected one or more network of vehicles are configured to forward the request to the loader trucks that will perform the specific task.

The one or more vehicles 114A-N are assigned to perform the specific task based on the policies defined for the one or more vehicles. For example, the term "policies" as used herein refers to terms and/or conditions decided and defined by an owner of the vehicle based on which the vehicles 114A-N are configured to operate. The policies defined by the vehicles 114A-N are a set of instructions that serve as conditions for vehicles to accept or reject a particular request for a specific task. In some embodiments, the policies may be implemented as smart contracts on the distributed ledger. Smart contracts are computer instructions or code intended to facilitate, verify, or enforce the negotiation or performance of a contract In an example, the policies may include duration of availability of a vehicle, a geographical area of operation of the vehicle, a monetary exchange value against a particular service and the like. In an embodiment, the one or more policies are defined for each of the vehicles 114A-N in the network of vehicles. Notably, more than one set of policies can be defined for each of the vehicles having different set of conditions of operation of the vehicle 114A-N. The vehicles 114A-N are configured to operate under the defined policies only and the request is accepted by the vehicle 114A-N only if any one of the set of policies match with the set of information pertaining to the specific task. Henceforth, the vehicles 114A-N are not controlled by a central arbitrator that instructs the vehicles to mandatorily perform a specific task. Beneficially, the one or more policies defined by the owner of the vehicle 114A-N dictate the operation of the vehicle, and not a central arbitrator as in conventional methods.

According to an embodiment, priority is dynamically assigned to each of the one or more policies defined for each of the vehicles 114A-N in the network of vehicles based on one or more factors. Notably, the priority assigned to each of the policies enable the vehicles to negotiate with user initiating the request via the vehicle assignment module 110. The policies may be arranged in a hierarchical manner. For this purpose, the autonomous vehicles 114A-N may further comprise a trained artificial intelligence module for dynamically assigning priority to the policies based on the one or more factors. The one or more factors include traffic conditions in real-time, weather conditions in real-time, a time of the day, area of execution of the specific task, and so forth. The trained artificial intelligence model may be trained to optimally determine which of the policy is best according to one or more dynamically changing factors in an environment.

For example, the policy having a highest priority may be ranked one, the policy having a second highest priority may be ranked two, the policy having a third highest priority may be ranked three and so forth. Beneficially, the priority assigned to each of the policies are dynamic in nature and may change according to the one or more factors. For example, a first policy defined for a particular vehicle 114A-N is 50 INR OR EURO or EURO for a distance of 10 kilometers in clear operating conditions and a second policy defined for the particular vehicle 114A-N is 60 INR OR EURO for a distance of 10 kilometers in constrained operating conditions. In case of clear weather conditions, the first policy is assigned with a first priority and the second policy is assigned with a second priority. However, in case of bad weather conditions such as heavy rains, the first policy may be assigned with a second priority and the second policy may be assigned with a first priority. Moreover, in case of bad weather conditions, the first policy may be discarded and the second policy may be assigned the highest priority In such a case, the vehicle 114A-N may be authorized by the owner to dynamically vary a priority of the policies using the trained artificial intelligence module for dynamically assigning priority to the policies based on the one or more factors related to operating conditions such as weather, traffic density, road diversion and so forth. Furthermore, in order to accept or reject a request, the set of instructions is compared with the policy having a highest priority. In a case, when the set of instructions do not match with the policy ranked one, the vehicle 114A-N may further compare the set of instructions with the policy ranked two and so forth.

According to another embodiment, the priority may be assigned manually to each of the set of policies defined for the vehicles 114A-N by the owner of the vehicle. The owner of the vehicle 114A-N may define the policies and further assign priority to each of the policies via a user interface. In an embodiment, the policies associated with each of the vehicles 114AN in the network of vehicles are stored in the distributed ledger. Each of the policies that are generated in the distributed ledger is verified and accepted by majority of vehicles in each of the networks of vehicles and entities in the distributed ledger, thereby creating a decentralized network wherein a vehicle 114A-N is allowed to operate in the networks only when the policies defined for a particular vehicle 114A-N are verified and accepted by the majority of networks of vehicles.

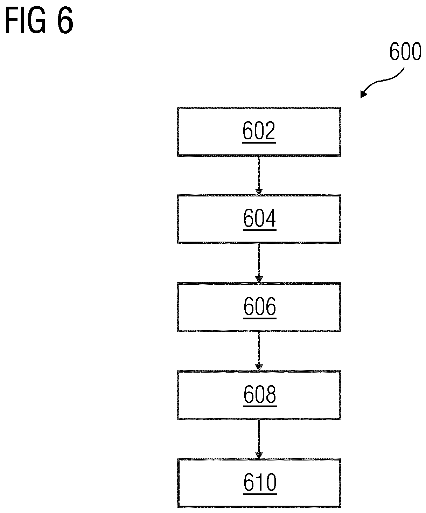

FIG 6 is a process flowchart 600 depicting a method of assigning the one or more vehicles 114A-N to perform the specific task based on the set of policies defined by one or more vehicles, according to an embodiment of the present invention. At step 602, vehicles are identified from the network of vehicles based on a policy associated with each of the vehicles 114A-N and the set of information of the specific task. Notably, in order to assign the selected vehicles 114A-N from the network of vehicles, the policy of each of the vehicles is compared with the set of information of the specific task to select vehicles 114A-N that are capable of performing the specific task and available to perform the specific task. In an example, a comparison is made whether the vehicle 114A-N is capable of operating in a particular geographical area of the execution of the specific task. If a particular vehicle is not operable in the particular geographical area, then that vehicle 114A-N is not selected for performing the specific task.

According to an embodiment, the one or more vehicles 114A-N are identified from the network of vehicles based on the policies associated with each of the one or more of vehicles 114A-N and the set of information of the specific task comprises comparing the set of information of the specific task with the one or more policies associated with each of the vehicles 114A-N in the network of vehicles. In an example, the set of information such as a geographical information of a location of the execution of the specific task, a type of task to be formed such as drop and pick of people and/or objects, a total distance to be covered by the vehicles, monetary value offered in exchange for execution of the specific task and so forth is compared with the one or more policies associated with each of the vehicles 114A-N such as duration of availability of a vehicle, a geographical area of operation of the vehicle, a monetary exchange value against a particular service and the like.

Further, the one or more vehicles 114A-N are identified from the network of vehicles based on an outcome of the comparison. The outcome of the comparison may be positive if the set of information of the specific task matches with at least one of the one or more policies associated with each of the vehicles 114A-N in the network of vehicles. In such a case, one or more vehicles 114A-N are identified in the network of vehicle as an available vehicle. Furthermore, the outcome of the comparison may be negative if the set of information of the specific task does not match with any of the one or more policies associated with each of the vehicles in the network of vehicles. In such a case, the one or more vehicles 114A-N are identified in the network of vehicle as an unavailable vehicle.

At step 604, a request for performing the specific task is sent to the identified vehicles 114AN based on a unique identifier associated with each of the vehicles and a unique identifier associated with the network of vehicles. Each of the vehicles is associated with a unique identifier that identifies a particular vehicle. Similarly, each of the networks of vehicles is also associated with a unique identifier that identifies the particular network. It will be appreciated that, the request is forwarded to the network of vehicles, and then the network of vehicles is configured to send the request to the identified vehicles 114A-N.

At step 606, a response to the request is received for performing the specific task from each of the identified vehicles 114A-N. When a request is received by the vehicle, the request is analyzed by the vehicle 114A-N, a comparison is made between the set of information of the specific task and the one or more policies defined for the vehicle 114A-N, and then the response to the request is generated based on an outcome of the comparison. In an embodiment, the response to the request for performing the specific task from each of the identified vehicles 114A-N may be received from at least one vehicle based on the priority assigned to the policies. In an embodiment, the response to the request for performing the specific task from each of the identified vehicles 114A-N may be received from at least one vehicle based on the match between the request and one of the policies.

In an example, three set of policies may be defined for a particular vehicle based on which the vehicle 114A-N is configured to respond to a request and operate to perform the specific task. Each of the set of policies may be assigned with a priority, such as a first set of policies may be assigned with the highest priority, a second set of policies may be assigned with second highest priority and a third set of policies may be assigned with lowest priority. In a case, the response to the request from the at least one vehicle 114A-N is based on the set of policies having a highest priority. The vehicle 114A-N may send a positive response i.e. acceptance to the request if the set of policies with the highest priority match with the set of instructions of the request. The vehicle 114A-N may send a negative response i.e. rejection to the request if the policies with the highest priority do not match with the set of instructions of the request. In another case, the response to the request from the at least one vehicle 114A-N is based on the set of policies having priority associated thereto, and the vehicle is authenticated to indulge in negotiation with the user based on different set of policies having priorities associated therewith via the vehicle assignment module 110. The vehicle 114A-N may send a positive response i.e. acceptance to the request if the set of policies with the highest priority match with the set of instructions of the request. In a case when the set of policies with the highest priority do not match with the set of instructions of the request, the set of instructions is further compared with the set of policies with second highest priority and so on.

At step 608, the response from each of the identified vehicles 114A-N is validated using an information associated with the vehicles stored in a distributed ledger. The information pertaining to each of the vehicles 114A-N may include a vehicle identification number, a location of the vehicle in real-time, an availability of the vehicle and so forth. The information is stored on the distributer ledger. Furthermore, the information associated with the vehicles 114A-N may include information regarding transactions involving vehicles, automated "smart contracts", documents relating to vehicles, and so on. In an embodiment, the distributed ledger and ledger entries may utilize encryption technology to facilitate and/or validate digital signatures, for example, facilitating multi-signature documentation, ensuring the authenticity of the vehicles 114A-N, integrity of the transactions, and so on. The information associated with the vehicles may be stored in the form blocks in the distributed ledger. A block for vehicle information includes a vehicle identification number (VIN), vehicle data, a timestamp indicating when the block was created, a hash reference for the ledger, and so on. In an embodiment, the response from each of the identified vehicles 114A-N is verified by comparing the vehicle data identification number of the vehicle from which the response is received and the information of the vehicle as stored in the distributed ledger. Further, the authenticity of the vehicle is validated using vehicle information. At step 610, the one or more vehicles 114A-N assigned to perform the specific task based on the validated response. When the vehicle sends an approval as a response to the user request, then the particular vehicle is assigned to perform the specific task.

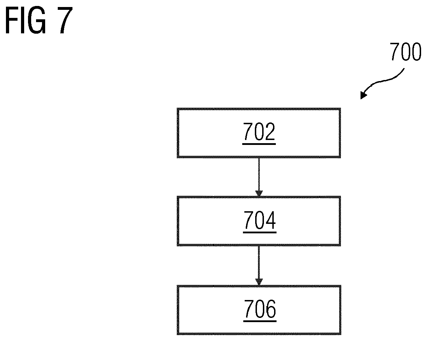

FIG 7 is a process flowchart 700 depicting a method of assigning the one or more vehicles 114A-N to perform the specific task, according to an embodiment of the present invention. At step 702, the one or more vehicles 114A-N are identified from the network of vehicles to perform the specific task based on a response received from each of the one or more vehicles 114A-N. The vehicles 114A-N that send an approval to the user are selected to perform the specific task.

At step 704, the specific task is divided into a number of sub-tasks to be performed by each of the one or more vehicles. In an example, when there is a requirement of multiple vehicles 114A-N to execute the specific task, then the specific task may be divided into a number of sub-tasks. In another example, a response to a particular request is analyzed from each of the one or more vehicles 114A-N to determine if multiple vehicles 114A-N are required to complete the execution of the specific task. Each of the sub-tasks is assigned to each of the selected vehicles 114A-N. The sub-tasks are performed by the respective vehicles to complete the execution of the specific task. At step 706, the selected one or more vehicles 114A-N are organized to perform the specific task. Each of selected one or more vehicles 114A-N that is assigned to perform a specific task is organized in a time-sequence manner based on an order of the execution of the sub-tasks. In an example, the specific task is transporting good from location A to location B.

However, in a case when the vehicles are not available to transport goods from location A to location B, then the task may be divided into three sub-tasks and assigned to three different vehicles. A first sub-task of transporting the goods from location A to location C may be assigned to a first vehicle such as a loader truck, a second sub-task of transporting the goods from location C to location B may be assigned to a second vehicle such as a loader truck, and a third sub-task of transferring the goods from the first vehicle to the second vehicle may be assigned to a third vehicle such as an aerial vehicle capable of loading and unloading goods. Herein, the first vehicle, second vehicle and the third vehicle are organized to form an internal permissioned network that communicate information such as geographical location, a time of completion of the sub-task, an initiation of the sub-task, a real-time status of execution of the sub-task, and so on with each other. Beneficially, the information is exchanged between the vehicles 114A-N to synchronize and time the actions of each of the selected vehicles in a such a manner that the specific task is executed within a defined time frame in the set of instructions of the specific task.

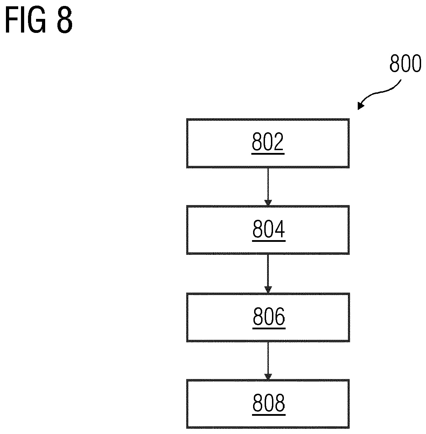

FIG 8 is a process flowchart 800 depicting a method of registering a vehicle 114A-N in a distributed ledger, according to an embodiment of the present invention. At step 802, a request to register a vehicle 114A in any of the plurality of networks of vehicles is received in a distributed ledger. Notably, the request may comprise information of the vehicle 114A such as unique identifier of the vehicle, technical capabilities, permission to share real-time location information, legal contracts, insurance information, verification documents of an owner of the vehicle and other information that is required to validate authenticity of the vehicle. Such information is provided to the distributed ledger in order to register the vehicle to operate in an area.

At step 804, the unique identifier associated with the vehicle is validated. In an example, the unique identifier of the vehicle may be validated by comparing vehicle information with a vehicle identification database comprising vehicle information. Such a vehicle identification database may be a public database owned by a government authority or a regulatory body that maintains a database of vehicles. At step 806, the vehicle is registered in the network of vehicles if the unique identifier associated with the vehicle is successfully validated.

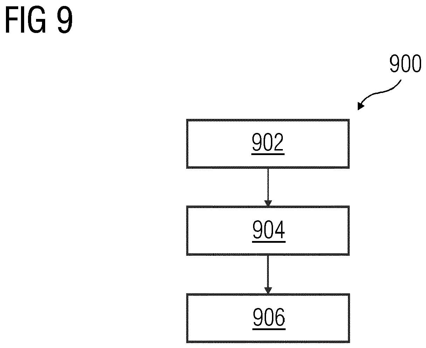

FIG 9 is a process flowchart 900 depicting a method of approving a policy from a vehicle in the network of vehicles, according to an embodiment. At step 902, a request to approve a policy from a vehicle 114A-N is received in the network of vehicles. The term "policy" as used herein refers to terms and/or conditions decided and defined by an owner of the vehicle based on which the vehicles 114A-N are configured to operate. The policies defined by the vehicles 114A-N are a set of instructions that serve as conditions for vehicles to accept or reject a particular request for a specific task. Optionally, the policies may be implemented as smart contracts on the distributed ledger. Smart contracts are computer instructions or code intended to facilitate, verify, or enforce the negotiation or performance of a contract In an example, the policies may include duration of availability of a vehicle, a geographical area of operation of the vehicle, a monetary exchange value against a particular service and the like.

At step 904, the policy associated with the vehicle 114A-N is validated based on predefined criteria. The predefined criteria may be a set of rules defined and maintained by a consensus achieved by majority of participants in the distributed ledger, thereby ensuring transparency in the system and mitigating any undue competitive advantage that few networks or vehicles may gain for regulatory purposes. At step 906, a response to the request to approve the policy is sent to the vehicle 114A-N based on the outcome of validation. If the policy is successfully validated, then an approval is sent as a response to the vehicle 114A-N. In such a case, the vehicle 114A-N is permitted to operate in the registered network of vehicles. Furthermore, if the policy is not validated successfully, the vehicle 114A-N is not permitted to operate or is prompted to modify the policy in order to be acceptable in the distributed ledger. According to an embodiment, violation of one of the policies may detected by the vehicle 114A-N in the network of vehicles. Notably, the vehicles 114A-N are continuously monitored by the entities of the distributed ledger, as every transaction and/or modification in the distributed ledger is to be accepted by the entities of the distributed ledger. It will be appreciated that ledgers are tamperproof, thereby any violation in policies is detected and is flagged as a violation in the ledger. Furthermore, the vehicle 114A-N is barred from participating in network of vehicles and/or participating in performing the specific task based on the detected violation.

Advantageously, the present invention provides a decentralized, secure, tamper-proof, and efficient system for a network of vehicles. Beneficially, the above mentioned method and system can be easily extended to be implemented in any type of autonomous system. Furthermore, the present invention may be well suited for scalable environments (e.g., the number of nodes can be scaled up and down), and/or environments where a high degree of decentralization and/or security are important. The present invention provides a simplified and/or potentially more trustworthy maintenance (e.g., through using a specific distributed ledger), and improved operational efficiency. Furthermore, the present invention enables fleet management of autonomous vehicles. The present invention further enables participants to join or leave a network on their own terms and conditions.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of reference numbers:

100 Cloud computing system
102 Cloud computing device
104 Cloud communication interface
106 Cloud computing hardware and OS
108 Cloud computing platform
110 Vehicle assignment module
112 Vehicle information database
114A-N Vehicles
116A-N User devices
200 Distributed ledger
202A-N Entities
204 Network
206A-N Computing devices
308 Data extraction unit
310 Data security unit
312 Block tracking unit
314 Blockchain interface unit
316 Blockchain database
318 Storage
400 Computing device
402 Processing unit
404 Memory
406 Bus
408 Input unit
410 Display unit
500 Method of managing a plurality of networks of vehicles
600 Method of assigning the one or more vehicles to perform the specific task based on the set of policies defined by one or more vehicles
700 Method of assigning the one or more vehicles to perform the specific task
800 Method of registering a vehicle in a distributed ledger
900 Method of approving a policy from a vehicle in the network of vehicles

## Claims

1. A method of managing a plurality of networks of vehicles, the method comprising:
receiving a request to assign one or more vehicles 114A-N to perform a specific task, wherein the request comprises a set of information pertaining to execution of the specific task;
determining a network of vehicles from the plurality of networks of vehicles based on the specific task; and
assigning the one or more vehicles 114A-N to perform the specific task based on policies associated with respective one or more vehicles 114A-N, wherein the policies are defined by the one or more vehicles 114A-N.

2. The method according to claim 1, wherein assigning the one or more vehicles 114A-N to perform the specific task based on the set of policies defined by one or more vehicles 114A-N comprises:
identifying vehicles 114A-N from the network of vehicles based on a policy associated with each of the vehicles 114A-N and the set of information of the specific task;
sending a request for performing the specific task to the identified vehicles 114A-N based on a unique identifier associated with each of the vehicles 114A-N and a unique identifier associated with the network of vehicles;
receiving a response to the request for performing the specific task from each of the identified vehicles 114A-N;
validating the response from each of the identified vehicles 114A-N using an information associated with the vehicles stored on a distributed ledger; and
assigning the one or more vehicles 114A-N from the identified vehicles 114A-N to perform the specific task based on the validated response.

3. The method according to any of the claims 1 or 2, further comprising defining one or more policies for each of the vehicles 114A-N in the network of vehicles.

4. The method according to claim 3, further comprising dynamically assigning priority to each of the policies defined for each of the vehicles 114A-N in the network of vehicles based on one or more factors.

5. The method according to claim 2, further comprising storing the policies associated with each of the vehicles 114A-N in the network of vehicles in the distributed ledger.

6. The method according to any of the claims 2 to 5, wherein identifying the one or more vehicles 114A-N from the network of vehicles based on the policies associated with each of the one or more of vehicles 114A-N and the set of information of the specific task comprises:
comparing the set of information of the specific task with the one or more policies associated with each of the vehicles 114A-N in the network of vehicles; and
identifying the one or more vehicles 114A-N from the network of vehicles based on an outcome of the comparison.

7. The method according to any of the claims 2 to 5, wherein receiving the response to the request for performing the specific task from each of the identified vehicles 114A-N comprises:
receiving the response to the request from at least one vehicle 114A-N based on the priority assigned to the policies.

8. The method according to any of the claims 2 to 5, wherein receiving the response to the request for performing the specific task from each of the identified vehicles 114A-N comprises:
receiving the response to the request from at least one vehicle 114A-N based on the match between the request and one of the policies.

9. The method according to claim 1, further comprising:
receiving a request to register a vehicle 114A-N in any of the plurality of networks of vehicles in a distributed ledger;
validating the unique identifier associated with the vehicle 114A-N; and
registering the vehicle 114A-N in the network of vehicles if the unique identifier associated with the vehicle 114A-N is successfully validated.

10. The method according to any of the claims 1 to 9, further comprising:
receiving a request to approve a policy from a vehicle 114A-N in the network of vehicles;
validating the policy associated with the vehicle 114A-N based on a predefined criteria; and
sending a response to the request to approve the policy to the vehicle 114A-N based on the outcome of validation.

11. The method according to any of the claims 1 to 10, further comprising:
detecting violation of one of the policies by the vehicle 114A-N in the network of vehicles; and
barring the vehicle 114A-N from participating in performing the specific task based on the detected violation.

12. The method according to claim 1, wherein assigning the one or more vehicles 114A-N to perform the specific task comprises:
selecting the one or more vehicles 114A-N from the network of vehicles to perform the specific task;
dividing the specific task into a number of sub-tasks to be performed by each of the one or more vehicles 114A-N; and
organizing the selected one or more vehicles 114A-N to perform the specific task.

13. A cloud computing system (100) comprising:
a communication interface (104) communicatively coupled to one or more vehicles (114A-N) in the plurality of networks;
one or more processing units (402) communicatively coupled to the communication interface (104); and
a memory (404) communicatively coupled to the one or more processing units (402), wherein the memory (404) comprises a set of machine readable instructions executable by the one or more processing units (402), wherein the set of machine readable instructions cause the processing unit to perform method steps according to any of the claims 1 to 12.

14. A cloud computing system (200) of claim 13 comprises:
a distributed ledger having a plurality of nodes (202A-N) implemented using the one or more processing units (402) and the memory (404).

15. A computer program product comprising machine readable instructions, that when executed by one or more processing units (402), cause the one or more processing units (402) to perform a method according to claims 1-12
